# FASCICULE DE BREVET EUROPEEN

(11) **EP 4 230 362 B1**
(45) Date de publication et mention de la délivrance du brevet: **09.10.2024**
(21) Numéro de dépôt: 23156004.6
(22) Date de dépôt: 10.02.2023
(51) Int. Cl.: B25J 11/00, B25J 15/00, B25J 15/06, B29C 70/38

(54) **SYSTÈME DE DRAPAGE DE PATCHS ET PROCÉDÉ D'ACHEMINEMENT AUTOMATIQUE DE PATCHS VERS UN PRÉHENSEUR DE PATCH PAR UN TEL SYSTÈME**
LAYUP-SYSTEM FÜR PATCHES UND VERFAHREN ZUR AUTOMATISCHEN FÜHRUNG VON PATCHES ZUM EINEM GREIFER DURCH DIESES SYSTEM
PATCH LAYUP SYSTEM AND METHOD FOR AUTOMATICALLY ROUTING PATCHES TO A PATCH GRIPPER BY MEANS OF THIS SYSTEM

(30) Priorité: 17.02.2022 FR 2201416
(43) Date de publication de la demande: 23.08.2023
(73) Titulaire: Safran Nacelles, 76700 Gonfreville-l'Orcher (FR)
(72) Inventeur: ROLLAND, Clément, 77550 MOISSY CRAMAYEL (FR); PROVOST, Benjamin, 77550 MOISSY CRAMAYEL (FR); LERETOUR, Didier, 77550 MOISSY CRAMAYEL (FR); VENTURE, Renaud, 77550 MOISSY CRAMAYEL (FR); LEBEGUE, Maxime, 77550 MOISSY CRAMAYEL (FR)
(74) Mandataire: Casalonga

(56) Documents cités:
- DE-A1- 102007 012 607
- DE-A1- 102011 109 698
- US-A1- 2006 090 856
- CEVOTEC GMBH: "SAMBA & ARTIST STUDIO Fiber Patch Placement by Cevotec (long version)", 27 September 2017 (2017-09-27), XP055963727, Retrieved from the Internet <URL:https://www.youtube.com/watch?v=P4JLecmO1r4> [retrieved on 20220922]
- LUKASZEWICZ DIRK H-J A ET AL: "The engineering aspects of automated prepreg layup: History, present and future", COMPOSITES PART B, vol. 43, no. 3, 17 December 2011 (2011-12-17), pages 997 - 1009, XP028905780, ISSN: 1359-8368, DOI: 10.1016/J.COMPOSITESB.2011.12.003

## Description

### Domaine technique

La présente invention concerne les dispositifs et procédés de fabrication de pièces composites et, en particulier, l'acheminement de patchs de matière pré-imprégnée ou adhésives en vue d'un dépôt de patchs sur un outillage ou une pièce en cours de fabrication.

La présente invention concerne plus particulièrement l'acheminement automatique de patchs vers un préhenseur permettant de saisir et draper des patchs de matière sur une pièce en cours de fabrication, un patch ayant la forme d'un fin matériau pégueux.

### Techniques antérieures

La pose de patch sur de grandes surfaces est généralement réalisée à l'aide d'un préhenseur permettant de saisir puis de déposer un patch à l'endroit voulu. Les solutions actuelles mettent par exemple en oeuvre des préhenseurs pneumatiques, électrostatiques, ou encore mécaniques.

Généralement, le préhenseur de patch est positionné sur une extrémité d'un bras robotisé qui effectue des allers-retours entre un moyen de mise à disposition qui peut être une table où sont disposés les patchs à saisir, et la pièce à draper où doivent être déposés lesdits patchs. Ces allers-retours peuvent représenter jusqu'à 50% du temps du cycle de drapage de la pièce, ce qui empêche d'obtenir une cadence élevée pour le drapage de pièces.

De plus, le mouvement répété d'allers-retours d'un bras robotisé augmente le risque de collision avec un élément de son environnement ainsi que l'usure du bras robotisé et/ou du préhenseur de patch soumis aux accélérations. Une dégradation du système de dépose de patch peut également apparaître, par exemple au niveau des câbles, ce qui nécessite une maintenance systématique et coûteuse en temps.

Dans le cas où les patchs saisis par le préhenseur sont positionnés sur une table, une phase de remplissage de la table, par exemple manuellement par un opérateur, est également nécessaire ce qui augmente le temps d'immobilisation du robot.

Le document US 2006/090856 A1 présente un système de drapage de patchs comprenant un bras robotisé muni d'un effecteur terminal comportant à la fois un dispositif d'acheminement automatique de patchs et un préhenseur de patchs, lequel préhenseur peut s'approcher du dispositif d'acheminement automatique par basculement. Cet effecteur terminal est cependant complexe, lourd et volumineux.

### Exposé de l'invention

La présente invention a donc pour but de pallier les inconvénients précités et de fournir un dispositif et un procédé d'acheminement automatique de patchs à proximité direct du préhenseur de patch, supprimant ainsi les allers-retours du préhenseur.

La présente invention a pour objet un système de drapage de patchs comprenant un préhenseur de patchs, un bras robotisé et un dispositif d'acheminement automatique de patchs, le préhenseur de patch et le dispositif d'acheminement automatique de patchs étant fixés sur le bras robotisé, le dispositif d'acheminement comprenant un ou plusieurs emplacements destinés à accueillir un enroulement de matière destinée à 1a réalisation de patchs, un système de déroulement de la matière enroulée, et un système de positionnement d'un patch destiné à pouvoir être positionné en regard du préhenseur de patch, le dispositif d'acheminement étant fixé par un axe de rotation sur le bras robotisé.

Ainsi, la suppression des allers-retours du préhenseur permet une diminution des risques de collision, une augmentation de la longévité du matériel impliqué, une réduction du temps de drapage, des trajectoires courtes simples à mettre en oeuvre par les développeurs de nouveaux programmes de drapage.

De plus, en cas de défaillance, il est possible de remplacer le système de drapage défaillant par un second système de drapage pendant que le système défaillant est en maintenance.

Avantageusement, le dispositif d'acheminement comprend un système d'enroulement d'un séparateur positionné entre les couches de matière de l'enroulement de matière.

Dans un mode particulier de réalisation, le dispositif comprend un moyen de coupe de patchs.

Avantageusement, le dispositif comprend un système de maintien d'un patch sur le système de positionnement.

La présente invention a encore pour objet un procédé d'acheminement automatique de patchs vers un préhenseur de patch par un système de drapage tel que défini précédemment, le procédé comprenant les étapes suivantes :
- Déroulement de matière destinée à la réalisation de patchs avec le système de déroulement à partir d'un enroulement de matière dans une position initiale du dispositif d'acheminement ;
- Approche du système de positionnement d'un patch vers le préhenseur de patch ;
- Mise en position d'un patch sous le préhenseur de patch ;
- Saisie du patch par le préhenseur de patch ; et
- Retrait du système de positionnement et retour du dispositif d'acheminement à sa position initiale.

Dans un mode de mise en oeuvre, le procédé comprend une étape préalable de positionnement d'un enroulement de matière sur l'emplacement destiné à accueillir un enroulement de matière.

Avantageusement, le procédé comprend en outre une étape de coupe d'un patch avant l'étape de mise en position d'un patch sous le préhenseur de patch.

L'invention a également pour objet un programme d'ordinateur configuré pour mettre en oeuvre le procédé tel que défini précédemment, lorsqu'il est exécuté par l'ordinateur.

### Brève description des dessins

D'autres buts, caractéristiques et avantages de l'invention apparaîtront à la lecture de la description suivante, donnée uniquement à titre d'exemple non limitatif, et faite en référence aux dessins annexés sur lesquels :
[Fig 1] est une vue schématique d'un premier mode de réalisation d'un dispositif d'acheminement automatique de patchs selon l'invention;
[Fig 2] est un organigramme illustrant schématiquement les étapes d'un procédé d'acheminement automatique de patchs selon l'invention ;
[Fig 3] est une vue schématique d'un dispositif d'acheminement automatique de patchs selon la figure 1 et au cours d'une étape de déroulement de matière destinée à la réalisation de patchs ;
[Fig 4] est une vue schématique d'un dispositif d'acheminement automatique de patchs selon la figure 1 et au cours d'une étape d'approche du système de positionnement vers le préhenseur de patch ;
[Fig 5] est une vue schématique d'un dispositif d'acheminement automatique de patchs selon la figure 1 et au cours d'une étape de coupe d'un patch ;
[Fig 6] est une vue schématique d'un dispositif d'acheminement automatique de patchs selon la figure 1 et au cours d'une étape de mise en position d'un patch sous le préhenseur de patch ;
[Fig 7] est une vue schématique d'un dispositif d'acheminement automatique de patchs selon la figure 1 et au cours d'une étape de saisie d'un patch par un préhenseur ;
[Fig 8] est une vue schématique d'un dispositif d'acheminement automatique de patchs selon la figure 1 et au cours d'une étape de retrait du système de positionnement et de retour du dispositif d'acheminement dans sa position initiale ; et
[Fig 9] est une vue schématique d'un second mode de réalisation d'un dispositif d'acheminement automatique de patchs selon l'invention.

### Exposé détaillé d'au moins un mode de réalisation

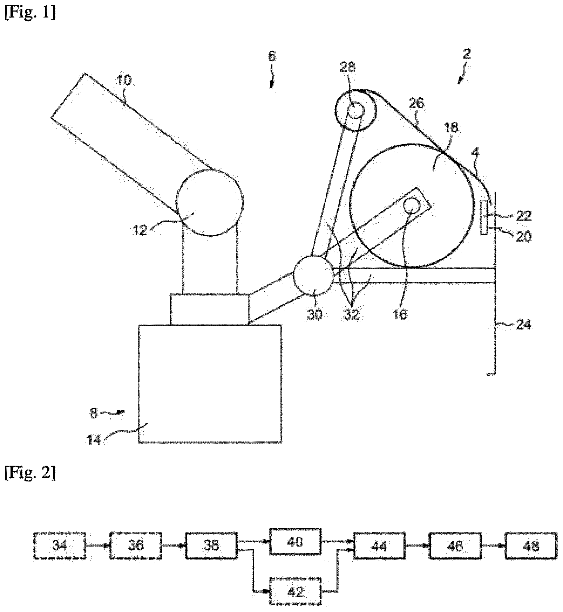

On a représenté schématiquement sur la figure 1 une vue d'un premier mode de réalisation d'un dispositif d'acheminement 2 automatique de patchs 4 pour système de drapage 6 de patchs.

En particulier, le système de drapage 6 comprend le dispositif d'acheminement 2 automatique de patchs et un préhenseur 8 de patch pour la saisie et le dépôt de patchs 4 sur une surface d'une pièce industrielle (non représentée) à draper avec lesdits patchs.

Le système de drapage 6 de patchs comprend un bras robotisé 10 comprenant des pivots 12 motorisés. Le préhenseur 8 de patch est fixé à l'extrémité du bras robotisé 10 de sorte que lorsque le bras robotisé 10 est mis en mouvement, le préhenseur 8 est déplacé, en particulier vers la surface à draper. Le préhenseur 8 est par exemple pneumatique et comprend une mousse déformable 14 au travers de laquelle une dépression est appliquée via des canaux, de manière à créer une aspiration capable de saisir un patch 4, une surpression pouvant ensuite être appliquée lors de la pose dudit patch 4.

Le dispositif d'acheminement 2 automatique de patchs 4 est réalisé dans un matériau métallique. Il comprend un emplacement 16 destiné à accueillir un enroulement de matière 18, la matière étant destinée à la réalisation de patchs 4. L'emplacement 16 est par exemple un tube sur lequel est glissé l'enroulement de matière 18. L'enroulement de matière 18 comprend en particulier un enroulement d'une bande de matière constituante des patchs 4. Cette bande de matière est par exemple prédécoupée ou continue. Dans ce dernier cas et de manière optionnelle, le dispositif d'acheminement 2 comprend un moyen de coupe 20 de patchs.

Le dispositif d'acheminement 2 comprend en outre un système de déroulement 22 de la matière enroulée, aussi appelé système de déroulement 22 de patchs, permettant de dérouler la matière de l'enroulement de matière.

Le dispositif d'acheminement 2 comprend également un système de positionnement 24 d'un patch 4 sous le préhenseur 8 de patch 4.

Dans un mode de réalisation particulier, l'enroulement de matière 18 comprend un enroulement d'un séparateur 26. Le séparateur 26 est un matériau, par exemple un film en téflon, placé au contact de la matière destinée à la formation des patchs 4 afin de faciliter le déroulement des patchs, notamment lorsque les patchs 4 sont réalisés dans un matériau pégueux. Ainsi, le séparateur 26 est positionné entre chaque couche de matière dans l'enroulement de matière 18. Dans ce mode de réalisation, le dispositif d'acheminement 2 comprend un système d'enroulement 28 du séparateur 26. Le système d'enroulement 28 du séparateur 26 est actif lorsque le système de déroulement 22 de patchs est également en fonctionnement. Le système d'enroulement 28 du séparateur 26 comprend par exemple un axe sur lequel vient s'enrouler le séparateur 26 déroulé de l'enroulement de matière 18. Le séparateur 26 a donc un rôle au stockage et lors du déroulement des patchs puis n'a plus de rôle et est simplement enroulé dans le système d'enroulement 28 au moment de son pelage, autrement dit au moment de sa désolidarisation avec l'enroulement de matière.

Selon l'invention, le dispositif d'acheminement 2 est fixé au même bras robotisé 10 que le préhenseur par un axe de rotation 30 permettant d'approcher le système de positionnement 24 à proximité directe du préhenseur 8 de patch 4. Le dispositif d'acheminement 2 comprend par exemple une structure métallique 32 permettant de relier l'emplacement 16 de l'enroulement de matière 18, le système d'enroulement 28, le système de positionnement 24 et le système de déroulement 22 à l'axe de rotation 30. Le dispositif d'acheminement 2 peut être amovible, de manière à pouvoir l'interchanger avec un autre dispositif d'acheminement comprenant un enroulement de matière de largeur différente par exemple.

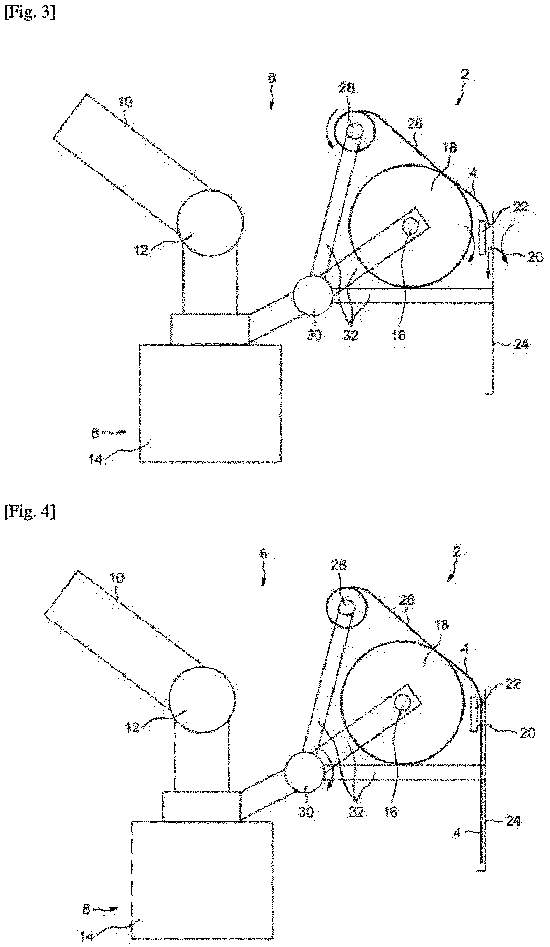

On a représenté sur la figure 2 les différentes étapes d'un procédé d'acheminement automatique de patchs vers un préhenseur 8 de patch 4 par un dispositif d'acheminement 2 de patchs. Les étapes sont par exemple mises en oeuvre par un ordinateur distant de manière automatique. Ces différentes étapes sont illustrées aux figures 3 à 8 sur lesquelles sont représentées différentes positions du dispositif d'acheminement 2 automatique de patchs 4 au cours du procédé d'acheminement. Les déplacements du dispositif d'acheminement 2 sont indiqués par des flèches directionnelles indicatives. De manière générale, les mouvements du dispositif d'acheminement 2 et du préhenseur 8 sont coordonnés de sorte que le ou les axes du ou des bras robotisés sur lesquels sont fixés le dispositif d'acheminement 2 et le préhenseur travaillent de concert de manière à optimiser les déplacements et le temps de déplacements du dispositif d'acheminement 2 et du préhenseur 8.

Dans une première étape 34 de préparation, il est nécessaire de charger et de positionner un enroulement de matière 18 sur l'emplacement 16 destiné à accueillir un enroulement de matière. Cette étape peut être effectuée automatiquement par un robot ou manuellement par un opérateur.

Dans une seconde étape 36 de préparation, un opérateur ou une machine automatique initie le déroulement de la matière de l'enroulement de matière 18 en tirant sur la matière des patchs 4 et en la glissant dans le système de déroulement 22 de patchs. Si l'enroulement de matière 18 comprend un séparateur 26, le déroulement du séparateur 26 est initié de la même manière jusqu'à ce que le séparateur 26 commence à être enroulé autour du système d'enroulement 28.

On a représenté sur la figure 3 le dispositif d'acheminement dans une position initiale et au cours d'une étape 38 de déroulement de patchs 4 par le système de déroulement 22. Dans un mode de réalisation, le système de déroulement 22 comprend des rouleaux motorisés (non représentés) placés de part et d'autre de l'épaisseur des patchs 4 afin de pincer et de tirer sur les patchs de manière à déplacer les patchs 4 vers le système de positionnement 24. De même, le séparateur 26 est déroulé de l'enroulement de matière 18 pour être enroulé autour du système d'enroulement 28. Dans un mode de réalisation, le système d'enroulement 28 est motorisé et automatisé.

Optionnellement, le dispositif d'acheminement 2 comprend un système de maintien (non représenté) d'un patch 4 sur le système de positionnement 24. En particulier le système de maintien peut être pneumatique et peut être activer de manière à maintenir un patch par aspiration contre le système de positionnement 24 durant les étapes nécessitant un maintien stable du patch, par exemple lors de déplacements. Le système de maintien peut également être électrostatique ou mécanique.

On a représenté sur la figure 4 le dispositif d'acheminement 2 au cours d'une étape 40 d'approche du système de positionnement 24 vers le préhenseur 8 de patch 4. Dans un mode de mise en oeuvre, l'axe de rotation 30 est motorisé et permet le basculement du dispositif d'acheminement 2 de manière à rapprocher le système de positionnement 24 du préhenseur 8 de patch 4.

Les deux étapes 38 et 40 précédentes peuvent être réalisées en parallèle.

Optionnellement, si les patchs 4 ne sont pas prédécoupés dans l'enroulement de matière 18, on effectue une étape 42 de coupe d'un patch 4 avec le moyen de coupe 20. Le moyen de coupe 20 de patchs est par exemple une lame mise en mouvement par un moteur afin de sectionner la matière déroulée en sortie de l'enroulement de matière 18 et de lui donner les dimensions d'un patch 4. Le moyen de coupe 20 est motorisé et automatisé de manière à pouvoir obtenir différentes tailles de patch 4 selon une consigne entrée sur un ordinateur distant. Le moyen de coupe 20 est par exemple situé et fixé au niveau du système de déroulement 22 de patchs, ledit système de déroulement 22 de patchs 4 étant solidaire du système de positionnement 24. L'étape 42 de coupe peut être réalisée parallèlement à l'étape 40 d'approche du système de positionnement 24 d'un patch 4 vers le préhenseur 8 de patch 4.

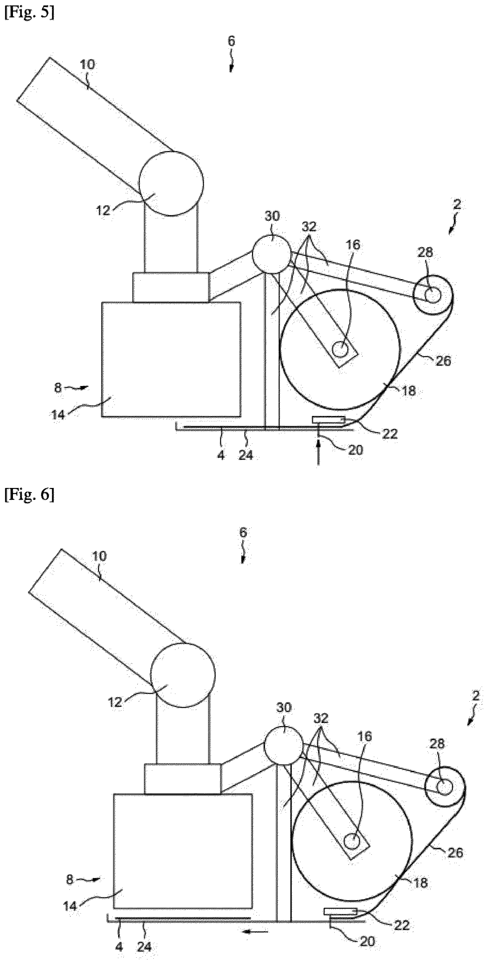

On a représenté schématiquement sur la figure 5 l'étape 42 de coupe d'un patch 4 après l'étape 40 d'approche du système de positionnement 24 d'un patch 4 vers le préhenseur 8 de patch 4.

On a représenté schématiquement sur la figure 6 l'étape 44 suivante durant laquelle on effectue la mise en position d'un patch 4 sous le préhenseur 8 de patch 4. Dans un mode de mise en oeuvre, l'étape 44 de mise en position est effectuée par le déplacement du système de positionnement 24 et/ou par le déplacement du préhenseur 8 de manière à positionner précisément le patch 4 sous le préhenseur 8. Le système de positionnement 24 comprend par exemple un plateau motorisé pouvant coulisser latéralement.

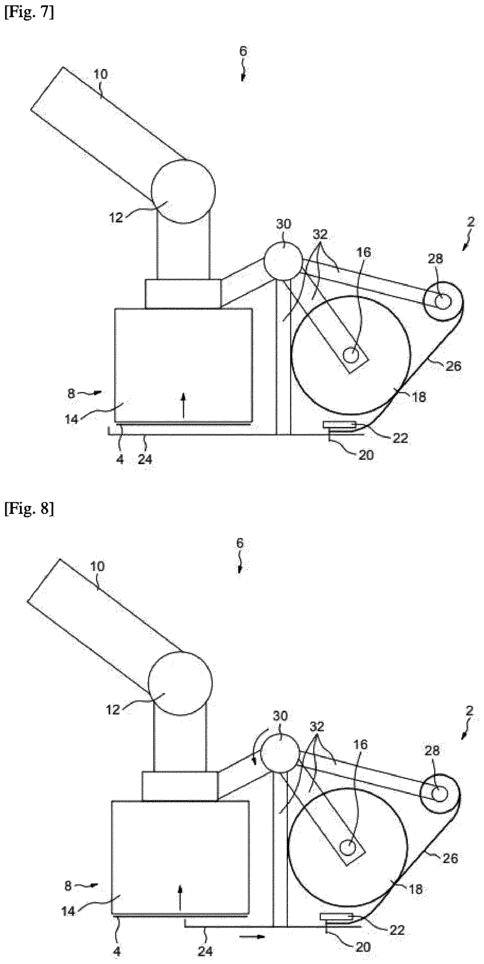

Durant l'étape 46 suivante, illustrée schématiquement sur la figure 7, le préhenseur 8 saisit le patch 4 mis en position à proximité. La saisie s'effectue par exemple par aspiration pneumatique tandis que le système de maintien est arrêté dans son fonctionnement.

On effectue enfin une étape 48 de retrait du système de positionnement 24 et de retour du dispositif d'acheminement 2 dans sa position initiale visible à la figure 3.

On a représenté sur la figure 8 l'étape 48 de retrait du système de positionnement 24 et de retour du dispositif d'acheminement 2 dans sa position initiale. Cette étape 48 est réalisée grâce à la motorisation de l'axe de rotation 30. Le procédé peut ensuite recommencer pour la pose d'un nouveau patch.

Dans un mode de mise en oeuvre, chaque étape ne nécessitant pas le préhenseur 8, ou pouvant s'effectuer hors de son champ de travail, peut être réalisée pendant que le préhenseur 8 pose un patch 4 sur une pièce à draper, le but étant de réaliser un maximum d'actions en parallèle pour diminuer la durée d'un cycle de drapage de patch.

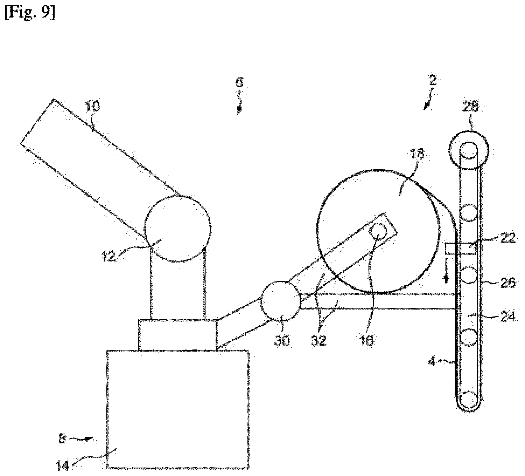

On a représenté schématiquement sur la figure 9 un second mode de réalisation d'un dispositif d'acheminement 2 automatique de patch 4. En particulier, le système de positionnement 24, le système de déroulement 22 et le système d'enroulement 28 du séparateur 26 sont positionnés de sorte que le séparateur 26 est déroulé avec la matière destinée à la réalisation des patchs 4 au travers du système de déroulement 22 jusqu'au système de positionnement 24. Le système de positionnement 24 est un tapis roulant au contact duquel se trouve le séparateur 26. Le tapis roulant permet d'une part de mettre en position un patch 4 sous le préhenseur 8 de patch 4, et d'autre part de déplacer le séparateur 26 jusqu'au système d'enroulement 28 du séparateur 26, situé à une extrémité du système de positionnement 24.

## Revendications

1. Système de drapage (6) de patchs comprenant un préhenseur (8) de patch, un bras robotisé (10) et un dispositif d'acheminement (2) automatique de patchs (4), le préhenseur de patch et le dispositif d'acheminement (2) automatique de patchs (4) étant fixés sur le bras robotisé (10), le dispositif d'acheminement comprenant un emplacement (16) destiné à accueillir un enroulement de matière (18) destinée à la réalisation de patchs (4), un système de déroulement (22) de la matière enroulée, et un système de positionnement (24) d'un patch (4) destiné à pouvoir être positionné en regard du préhenseur (8) de patch (4),
le système de drapage étant **caractérisé en ce que** le dispositif d'acheminement (2) est fixé par un axe de rotation (30) sur le bras robotisé (10).

2. Système selon la revendication 1, dans lequel le dispositif d'acheminement comprend un système d'enroulement (28) d'un séparateur (26) positionné entre les couches de matière de l'enroulement de matière.

3. Système selon l'une des revendications 1 et 2, dans lequel le dispositif d'acheminement comprend un moyen de coupe (20) de patchs (4).

4. Système selon l'une quelconque des revendications 1 à 3, dans lequel le dispositif d'acheminement comprend un système de maintien d'un patch (4) sur le système de positionnement (24).

5. Procédé d'acheminement automatique de patchs vers un préhenseur de patch par un système de drapage (6) selon l'une des revendications 1 à 4, **caractérisé en ce qu'**il comprend les étapes suivantes :
- Déroulement (étape 38) de matière destinée à la réalisation de patchs (4) avec le système de déroulement (22) à partir d'un enroulement de matière (18) dans une position initiale du dispositif d'acheminement (2) ;
- Approche (étape 40) du système de positionnement (24) d'un patch (4) vers le préhenseur (8) de patch (4) ;
- Mise en position (étape 44) d'un patch (4) sous le préhenseur (8) de patch (4) ;
- Saisie (étape 46) du patch (4) par le préhenseur (8) de patch (4) ; et
- Retrait (étape 48) du système de positionnement (24) et retour du dispositif d'acheminement (2) à sa position initiale.

6. Procédé selon la revendication 5, comprenant une étape (34) préalable de positionnement d'un enroulement de matière (18) sur l'emplacement (16) destiné à accueillir un enroulement de matière (18).

7. Procédé selon l'une des revendications 5 et 6, comprenant une étape (42) de coupe d'un patch (4) avant l'étape (44) de mise en position d'un patch (4) sous le préhenseur (8) de patch (4).

8. Programme d'ordinateur configuré pour mettre en oeuvre le procédé selon l'une quelconque des revendications 1 à 7, lorsqu'il est exécuté par l'ordinateur.

## Patentansprüche

1. Drapiersystem (6) für Patches, das einen Patch-Greifer (8), einen Roboterarm (10) und eine automatische Zuführvorrichtung (2) für Patches (4) umfasst, wobei der Patch-Greifer und die automatische Zuführvorrichtung (2) für Patches (4) am Roboterarm (10) befestigt sind, wobei die Zuführvorrichtung eine Stelle (16), die dazu bestimmt ist, eine Materialrolle (18) aufzunehmen, die zur Erstellung von Patches (4) bestimmt ist, ein Abrollsystem (22) des aufgerollten Materials und ein Positionierungssystem (24) für einen Patch (4) umfasst, das dazu bestimmt ist, gegenüber dem Greifer (8) für Patches (4) positioniert werden zu können,
wobei das Drapiersystem **dadurch gekennzeichnet ist, dass** die Zuführvorrichtung (2) durch eine Drehachse (30) am Roboterarm (10) befestigt ist.

2. System nach Anspruch 1, wobei die Zuführvorrichtung ein Aufrollsystem (28) aus einem zwischen den Materiallagen der Materialrolle positionierten Trennelement (26) umfasst.

3. System nach einem der Ansprüche 1 und 2, wobei die Zuführvorrichtung ein Schneidemittel (20) für Patches (4) umfasst.

4. System nach einem der Ansprüche 1 bis 3, wobei die Zuführvorrichtung ein System zum Halten eines Patches (4) an dem Positionierungssystem (24) umfasst.

5. Verfahren zum automatischen Zuführen von Patches zu einem Patch-Greifer durch ein Drapiersystem (6) nach einem der Ansprüche 1 bis 4, **dadurch gekennzeichnet, dass** es die folgenden Schritte umfasst:
- Abrollen (Schritt 38) von Material, das zur Erstellung von Patches (4) mit dem Abrollsystem (22) von einer Materialrolle (18) in einer Ausgangsposition der Zuführvorrichtung (2) bestimmt ist;
- Annähern (Schritt 40) des Positioniersystems (24) eines Patches (4) zu dem Greifer (8) für Patches (4);
- Positionieren (Schritt 44) eines Patches (4) unter dem Greifer (8) für Patches (4);
- Erfassen (Schritt 46) des Patches (4) durch den Greifer (8) für Patches (4); und
- Entfernen (Schritt 48) des Positionierungssystems (24) und Zurückbringen der Zuführvorrichtung (2) in ihre Ausgangsposition.

6. Verfahren nach Anspruch 5, die einen vorherigen Schritt (34) des Positionierens einer Materialrolle (18) an der Stelle (16) umfasst, die dazu bestimmt ist, eine Materialrolle (18) aufzunehmen.

7. Verfahren nach einem der Ansprüche 5 und 6, die einen Schritt (42) des Schneidens eines Patches (4) vor dem Schritt (44) des Positionierens eines Patches (4) unter dem Greifer (8) für Patches (4) umfasst.

8. Computerprogramm, das dazu konfiguriert ist, das Verfahren nach einem der Ansprüche 1 bis 7 durchzuführen, wenn es von dem Computer ausgeführt wird.

## Claims

1. A patch layup system (6) comprising a patch gripper(8), a robotic arm (10) and a device (2) for automatically rooting patches (4), the patch gripper and the device (2) for automatically rooting patches (4) being fastened on the robotic arm (10),
the routing device comprising a location (16) intended to accommodate a winding of material (18) intended for the production of patches (4), a system (22) for unwinding the wound material, and a system (24) for positioning a patch (4) intended to be able to be positioned opposite to the gripper (8) of patch (4),
the layup system being **characterised in that** the rooting device (2) is fastened by an axis of rotation (30) on the robotic arm (10).

2. The system according to claim 1, wherein the routing device comprises a system (28) for winding a separator (26) positioned between the layers of material of the material winding.

3. The system according to one of claims 1 and 2, wherein the routing device comprises means (20) for cutting patches (4) .

4. The system according to any one of claims 1 to 3, wherein the routing device comprises a system for holding a patch (4) on the positioning system (24).

5. A method for automatically rooting patches to a patch gripper by a layup system (6) according to one of claims 1 to 4, **characterised in that** it comprises the following steps:
- Unwinding (step 38) of material intended for the production of patches (4) with the unwinding system (22) from a winding of material (18) in an initial position of the rooting device (2);
- Approaching (step 40) the positioning system (24) of a patch (4) towards the gripper (8) of patch (4);
- Positioning (step 44) a patch (4) under the gripper (8) of patch (4);
- Grasping (step 46) the patch (4) by the gripper (8) of patch (4); and
- Removing (step 48) the positioning system (24) and returning the rooting device (2) to its initial position.

6. The method according to claim 5, comprising a prior step (34) of positioning a winding of material (18) on the location (16) intended to accommodate a winding of material (18) .

7. The method according to one of claims 5 and 6, comprising a step (42) of cutting a patch (4) before the step (44) of positioning a patch (4) under the gripper (8) of patch (4).

8. A computer program configured to implement the method according to any one of claims 1 to 7, when it is executed by the computer.
